# EUROPEAN PATENT APPLICATION

(11) **EP 1 970 458 A1**
(43) Date of publication of application: **17.09.2008**
(21) Application number: 08101229.6
(22) Date of filing: 03.02.2008
(51) Int. Cl.: C22B 7/04, C22B 19/30, C22B 19/32, C25C 5/04, C25C 7/00

(54) **System for the in-situ treatment of molten zinc baths**

(30) Priority: 07.02.2007 IT MI20070218
(71) Applicant: Priuli, Federico, 37053 Cerea (VR) (IT); Viesi, Emanuele, 38060 Brentonico (TN) (IT)
(72) Inventor: Priuli, Federico, 37053 Cerea (VR) (IT); Viesi, Emanuele, 38060 Brentonico (TN) (IT)
(74) Representative: Incollingo, Italo

(57) **Abstract**

A present invention concerns a method (and relevant apparatus) for the in situ treatment of zinc bathes to collect ashes and recover metallic zinc trapped therein, by substantially reducing environment pollution, waste quantities and energy consumption, said method comprising the steps of : surveying the level of the bath, compacting, tamping, pushing and extracting in situ the bath ashes.

## Description

The present invention concerns a system for the in-situ warm treatment of baths of zinc plating, in particular for the recovery of metallic zinc trapped in the exhausted ashes under the form of dust and light oxides, and for the automated extraction of said (so substantially zinc free) ashes from said baths.

The system according to the invention comprises said treatment method and the apparatus for its reduction to practice.

The method according to the invention comprises substantially the steps of:
a) Surveying the zinc bath level (L);
b) Compacting the ashes by displacing and concentrating them in a proximal zone (ZP) at the bath internal end;
c) Ramming or tamping (preferably during the compacting step) the so collected ashes in said proximal zone in order to reduce to minimum values the residual mass of zinc scums and consequently the quantity of fresh zinc to be integrated in the bath;
d) Pushing the so tampered ashes towards a collector and/or against a tub wall; by collecting them exclusively per skimming of the zinc bath and by directly discharging them in a collector without passing said ashes through opening, holes channels of any kind; preferably the collection is carried out with a first (LA1) and a second blade (LA2 associated to LA1) which will compress the ashes against the vertical wall of the basin; at the end of the vertical compression, the ashes will subside in a natural manner on the horizontal portion of the basin;
e) Extracting the ashes and deposit them in an ad hoc tank.

The apparatus to embody said method comprises at least:
- a support structure (STRU);
- an arm (BRA) mobile (over the bath) horizontally forward and backward, and vertically (rise and descent);
- compacting means, in particular a first blade (LA1) orthogonally associated to said arm and a second blade (LA2) associated to said first blade (LA1);
- tamping pegs and teeth associated to the bottom of an ash overturning basket and/or to a rotating rod;
- means for the arm horizontal movement within two limits, the first limit being a no-extension position (zero point) at the compacted configuration and the second limit being an extended position substantially equal to the arm length; and
- means to vertically move the arm between several levels (starting from the initial zero level of the mechanism rest).

### Prior Art

The warm zinc plating is a warm treatment to protect metal articles against corrosion by immersing them in a molten zinc bath at a temperature of about 450°C; it is firstly applied mainly on carbon steel and involves the formation of internal alloys of Fe and Zn.

Conventional treatments are described in patents having already a life of 25-50 years and which are therefore lapsed (see for instance US Patent n° 4,169,776, Indian Patent n° 142706, Canadian Patent n° 494296 etc.).

The nowadays used technique foresees: - the preparation of a metallic zinc molten bath; - immersion for few minutes in this bath of Fe- manufactured articles; - the bath surface cleaning; the rudimentary ramming of the floating ashes with the aid of not-big shovels manually moved for not uniform times and modes, at the turn personal discreption; - elimination of the so accumulated ashes by means of said manual means with which the ash are charged and discharged in a container, by using holed shovels.

Among the major inconveniences of this conventional technique we limit ourself to mention: - it is manual and therefore is expensive in terms of time, labour and environmental hygiene as consistent, uncontrollable smoke quantities are freed during the tamping operation; - the poor drainage of molten metal from the fixture and equipment makes it necessary that the molten metal trapped in the ashes be extracted together with said ashes causing thereby a strong increase of the Zn consumption. Attempts have been made to at least partially automate this treatment, for instance the US Patent Publication n° 2004/0060394 describes a complex apparatus comprising a room for the bath skimming reception, a room for the treatment of the collected skimming, a transportation Archimedean screw between said two rooms, a stirrer and a skimmed transfer mechanism to a thirm room where the zinc recovery does not take place in situ.

To the best of Applicants knowledge there are, up to now, neither methods nor plants for the in-situ treatment of the skimmings and ashes without a distribution in several chambers and thus the necessity of inter room connections and transfers (which moreover can generate zinc oxidation).

### Summary of the Invention

First object of the present invention is to provide a method (and relevant apparatus) wherein all the treatment of skimming and ashes takes place in situ, i.e. in the bath to be treated.

An other object is to provide a treatment method to minimize the mass of produced wastes and to render constant and minimal the zinc contents in the ashes.

Still an other object is to control the diffused emissions by easily capturing the smokes which are freed in particular during the ashes treatment thanks to an optimal exploitation of the devices (f.i. the aspiration filters) already normally present on the zinc plating baths.

A further object is to provide automated apparatus to reduce the zinc quantity in the ashes by carrying out the no-more manual tamping with substantially uniform values of the extracted ashes.

The more important characteristics of the invention are recited in the claims at the end of this description , which can however be considered here incorporated.

### Brief Description of the accompanying Drawings.

The various features and advantages of the invention will more clearly appear from the following description of the embodiments shown for (illustrative and not limitative) purposes in the drawings wherein:
- figure 1 is a block scheme representing the most relevant steps of the method according to the invention;
- figures 2, 2', 2a, 2a', 2b, 2b', 2c, 2c', 2d, 2d', and 2e, 2e' are schematic frontal views representing the steps, positions and configurations which the system according to the invention carries out, respectively takes or assumes during the method essential phases;
- figure 3 and 3' are also schematic views, partially cross-sectioned with a plan containing the major axes of the bath tub and of the extensible arm carrying at its free end the means for compacting, tamping, collecting of the ashes by simply skimming the zinc bath free surface;
- figures 3A and 3B are schematic partial views of possible embodiment of a mechanism to overturn the ash collecting basket to be discharged in a big storage deposit; and
- figures 4, 4' and 5 are longitudinal, partially cross-sectioned views of the system.

### Detailed Description of the embodiments shown in the drawings.

As anticipated the hot zinc plating is about hundred years old.

It is knowingly carried out by immersing the manufactured articles to be treated, in a molten zinc bath for a reasonable number of minutes.

Once the material articles are immersed, the formation takes place of ashes and superficial skimmings, these residues must be removed before the article extraction and are normally set aside in a zone of the molten bath not involved in said extraction which is to be done before the immersion successive cycles.

Therefore it seems not necessary to describe here in detail the tubs, the baths, the hooks of suspension of the articles to be coated, the procedures and modes of the immersion and extraction of said articles in said baths etc..

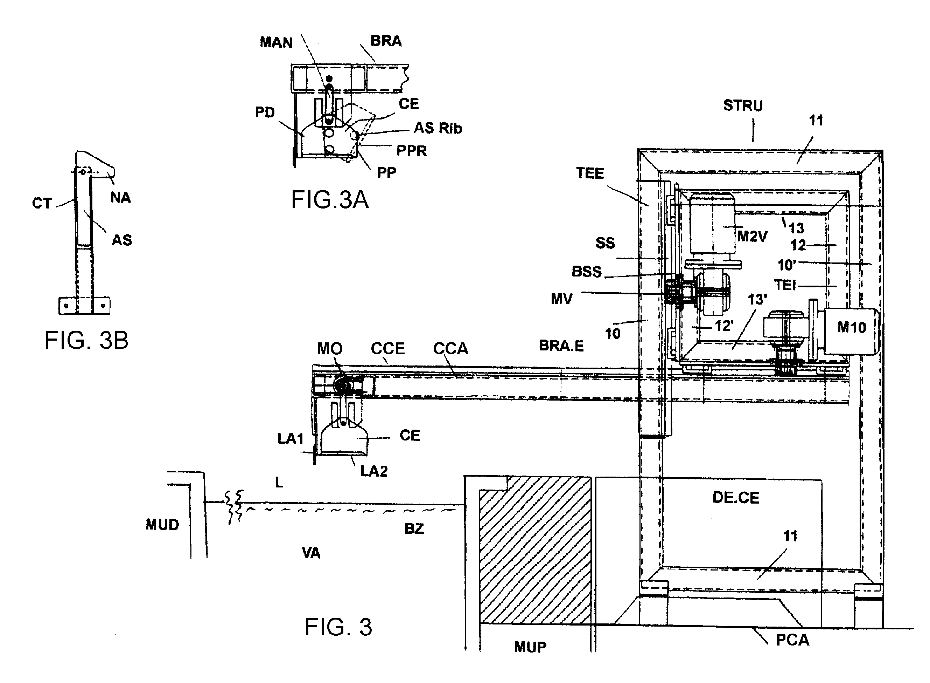

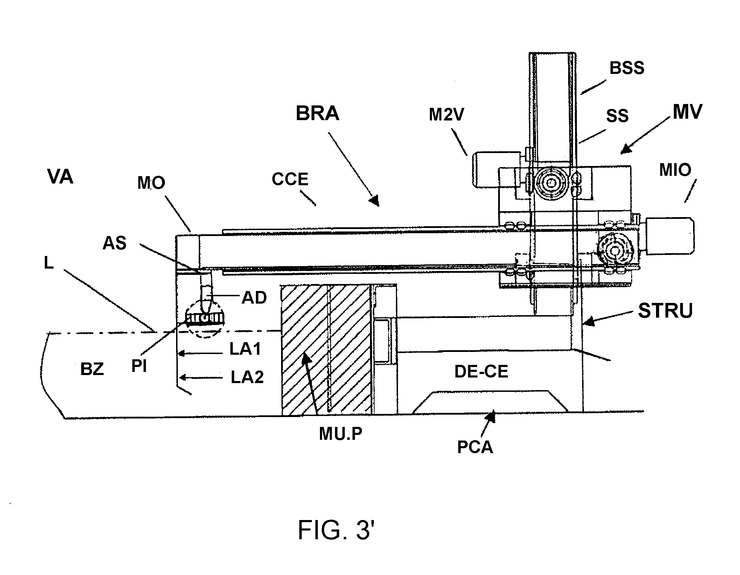

Accordingly in the transversal cross-section of fig. 3 are shown in schematic form: - a bath tub VA limited by the proximal wall MU.P (the distal wall MUD being only hinted as said bath tubs have various lengths even over 20 meters); - the zinc plating bath BZ in said tub VA with its upper free level L; - the extensible horizontal bar or arm BRA consisting of an inner body sliding within an external (cylindrical or polygonal) body CCE, and carrying a (per sè known) mechanism MO (f.i. consisting of toothed wheels and stud chain) for the horizontal translation activated by an ad-hoc motor, f.i. MIO; - a vertical movement mechanism MV activated by a second motor M2V, which operates on a latch on a track or slide BSS; - the basket CE (shown in a substantially trapezoidal shape) suspended from a horizontal displacement mechanism MO; - a first vertical blade LA1 for displacing and compacting the superficial ashes; - a second horizontal blade LA2 which is preferably toothed and used as a plate of the basket CE bottom, parallel to the zinc bath; - the ash deposit DECE resting on the felt pattering plan PCA.

In fig. 3 is also shown a structure STRU consisting of an outer frame TEE formed by two uprights or vertical rods 10-10' and two cross pieces or traverses 11-11', as well as of an inner frame TEI still constituted of uprights 12-12' and crosspieces 13-13', to said frames being fixed a motor MO1 of horizontal (there and back) movement, a motor MV2 for the vertical movement and a motor M3 (hidden an thus non shown in fig. 3) to impart up and down quick movements to the second blade.

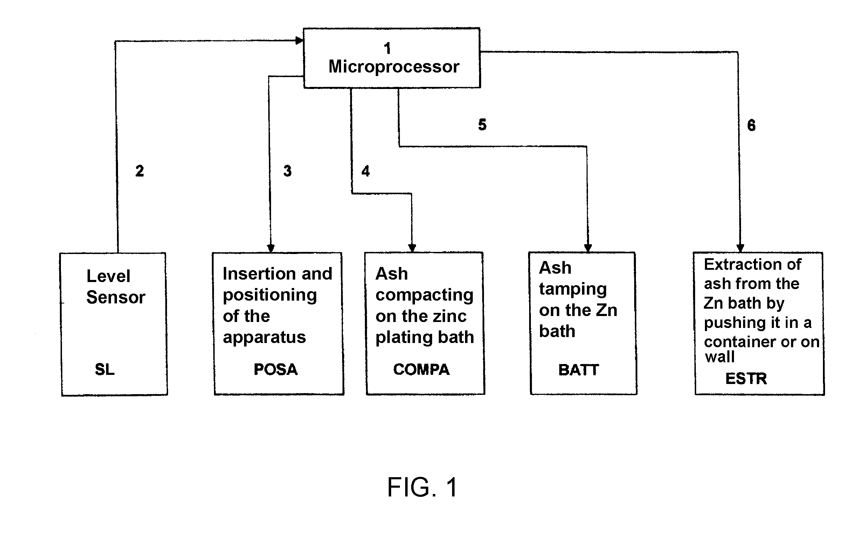

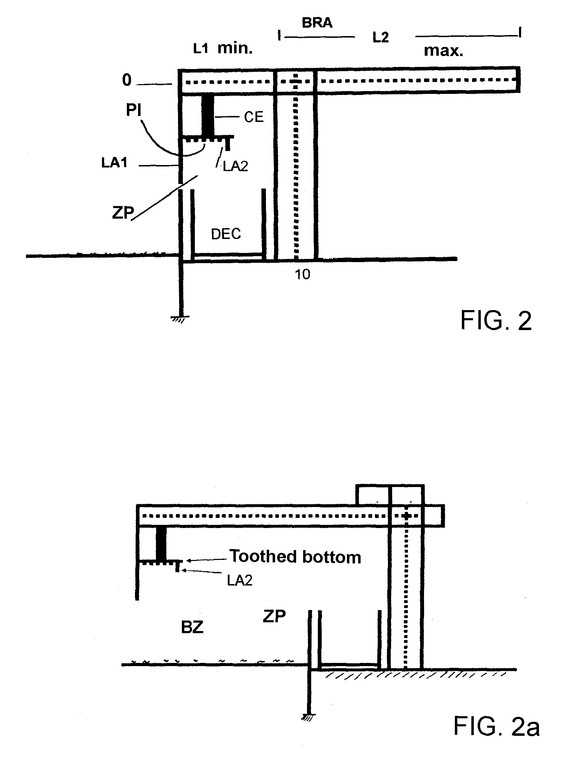

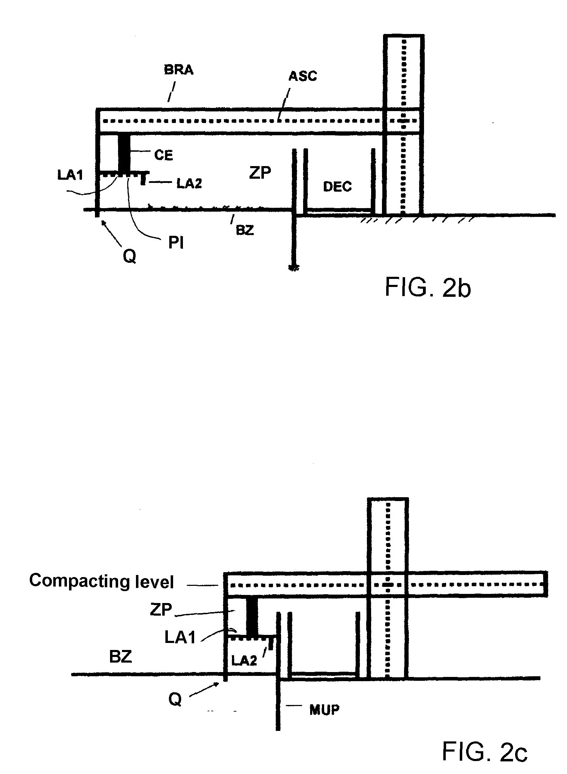

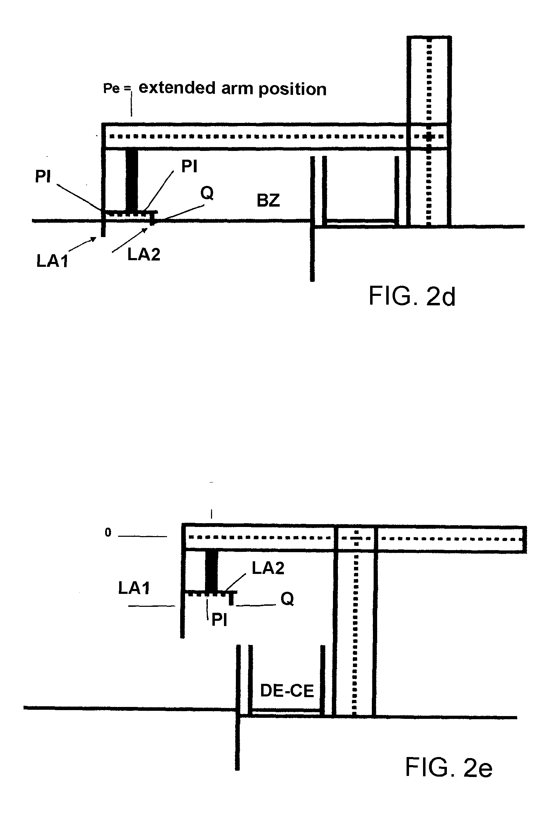

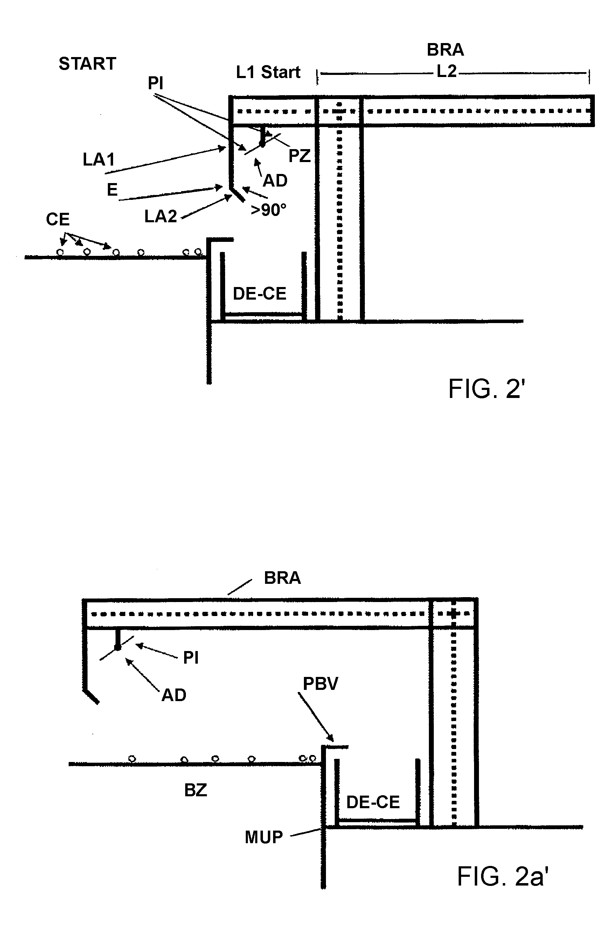

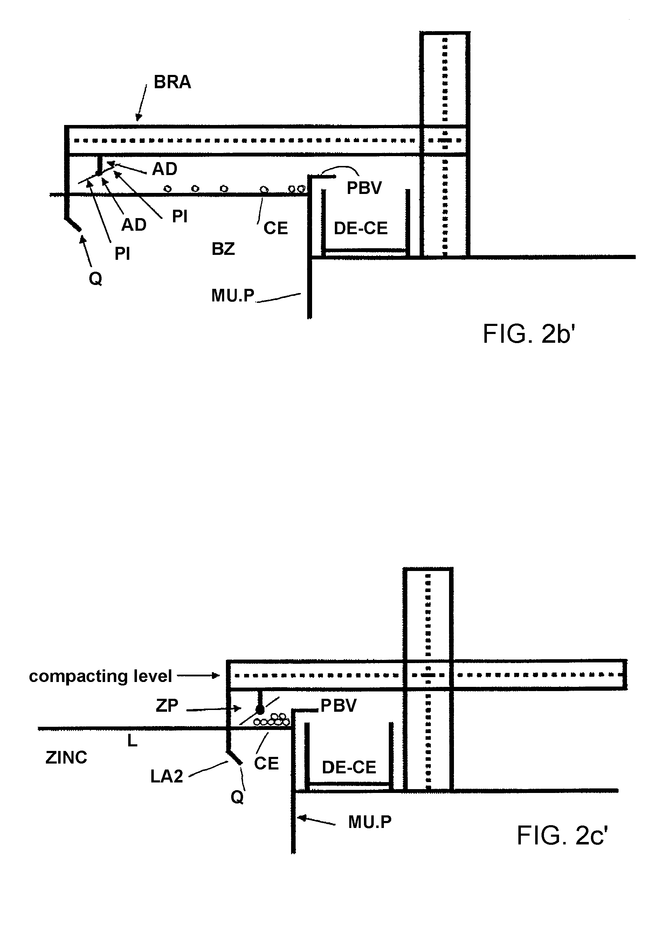

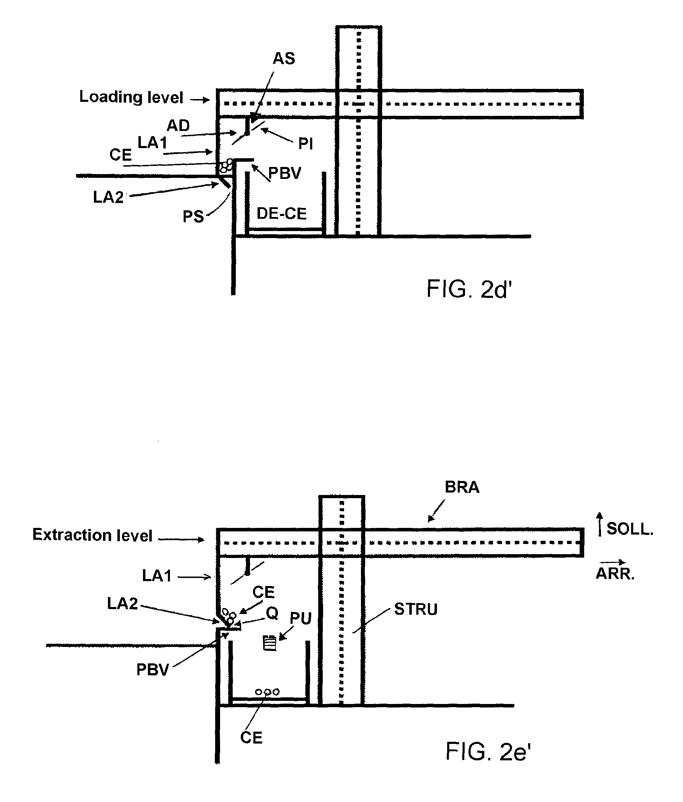

It seems convenient to return to the block scheme of fig. 1 which shows a microprocessor (1) MC carrying out at least following functions to: - 1) activate initially through line 2 a sensor SL inserted in the bath BZ to monitor the level L of said bath BZ in the tub or basin VA; - 2) operate the insertion and positioning of the apparatus of fig. 2, i.e. its setting on the bath BZ; - 3) operate the mechanism to displace vertical blade LA1 towards the proximal zone ZP thereby carrying out the ash compacting step COMPA; - 4) operate rod-crank eccentric cam MAN which brings about the up-and-down movement of a second blade LA2 or/and of a preferably toothed bottom of ash recovering basket CE to carry out the operation of tamping BATT of the ashes compacted in the proximal zone ZP; - 5) operate the arm so to have pegs or teeth PI associated to a rotating rod AD or to a basket bottom to skim the zinc bath level: by returning backward in this configuration, the basket loads the exhaust ashes to be extracted (fig. 2d) whereas rod AD (fig. 2d') pushes the ashes on the proximal wall portions PS and PBV (fig. 2E'); - control the operation of extraction of the ashes accumulated in the optional basket CE, in other words it operates the ash transfer from the basket to a big deposit collector DE.CE when said basket CE in its return stroke from the proximal zone ZP to the distal zone ZD impacts the nose NA (fig. 3B) projecting out from the tubular rod CT with at least a discharging mechanism MSC fixed to the machine structure; when the distal wall PD of basket CE beats on the projecting nose NA, basket CE undergoes at least a partial rotation i.e. its proximal wall PP tilts going in the position PPR dashed in fig. 3A and facilitates the discharging of the ashes from the at least partially rotated basket to the ash deposit DE-CE. The work of the pegs and teeth when associated to a rod AD will be described later.

The discharging device MSC is shown in fig. 3B as consisting of a tubular body CT inside which is inserted a rod AS terminating in a nose NA.

In details the particularly simple and effective apparatus of figures 3, 3A, 3B (first embodiment) is a first effective reduction to practice of the method shown in the purposely reduced form of fig. 1, carrying out a treatment cycle comprising the process phases shown in the figures from 2 to 2e, wherein:
- Fig. 2 shows the initial compacted asset of the apparatus of fig. 3 at the moment of its introduction in the structure STRU; it can be seen that arm BRA is in its vertically highest position 0 and is extended on the tub VA only for its minor length L1 min. whereby it is displaced within the structure STRU over the major length L2max: in this starting position the skimming blade LA1 is lifted and vertically aligned to the proximal wall MUP whereas basked CE and the relevant tamping blade LA2 are totally extracted out of the bath BZ;
- The first phase is shown in fig. 2a wherein the arm BRA has carried out a horizontal displacement stroke (under the action of motor M10) assuming thereby its maximum extension over bath BZ;
- The second phase (shown in fig. 2b) is that of the vertical descent of the arm from its initial level 0 to the level in which blade LA1 slightly penetrate (with its point) inside the bath BZ assuming the most appropriate position to skim the bath superior level L in which have been brought the ashes produced in the zinc plating operation;
- The third phase is that of fig. 2c in which the lowered arm BRA has been taken back, skimming all the ashes on the top surface of bath BZ, for a length substantially equal to L2 max; in this manner the major part of the skimmed ashes are assembled in compact form in the proximal zone ZP;
- The fourth phase (tamping) is shown again in fig. 2c: in this configuration a third motor (M3 not visible) imparts to the basket and to the associated blades an up-and-down movement which produces the tamping of the ashes compacted in the zone ZP. The motor M3 is stopped after a short time which is variable according to the result.
- The fifth phase (extraction and cooling) is represented in fig. 2d which shows now also the second blade LA2 (preferably associated to the bottom of basket CE) and is provided with teeth, pegs and/or protuberances PI, the innerst one of which is preferably bigger than the other ones.
- The sixth phase or manoeuver is that of fig. 2e in which blades LA1 and LA2 are extracted out of the bath. The arm BRA is now being retracted in its minimal position to return, thereafter to its initial position (fig. 2) allowing thereby in this last move, the decharging of the exhausted ashes loaded in the basket.

At this point the machine is in its initial position and can start again the same cycle of: - the arm extension manoeuvre (fig. 2a); - lowering of said arm up to the first blade penetration into the bath (2b); - compacting the ashes accumulated in the proximal zone ZP because of the lowered arm return in its unextended position (fig. 2c); - vertical up and down movements of the ash tamping blade LA2 (fig. 2); - hoisting of the still unextended arm (fig. 2e); - backward movement of the arm up to the unloading of the ashes in the basket.

For the robotized motorization of the system first embodiment to carry out an horizontal movement (X axis) of the arm extension and retraction (ash compacting), a vertical movement (Y axis) of rise and descent of same arm BRA, the up-and-down movement of the second blade (ash tamping), and, possibly oscillating and partial overturning movement of the basket CE around a Z axis (orthogonal to X and Y), an apparatus can be used of kinematics on at least three axis bringing about a total movement with at least four freedom degrees.

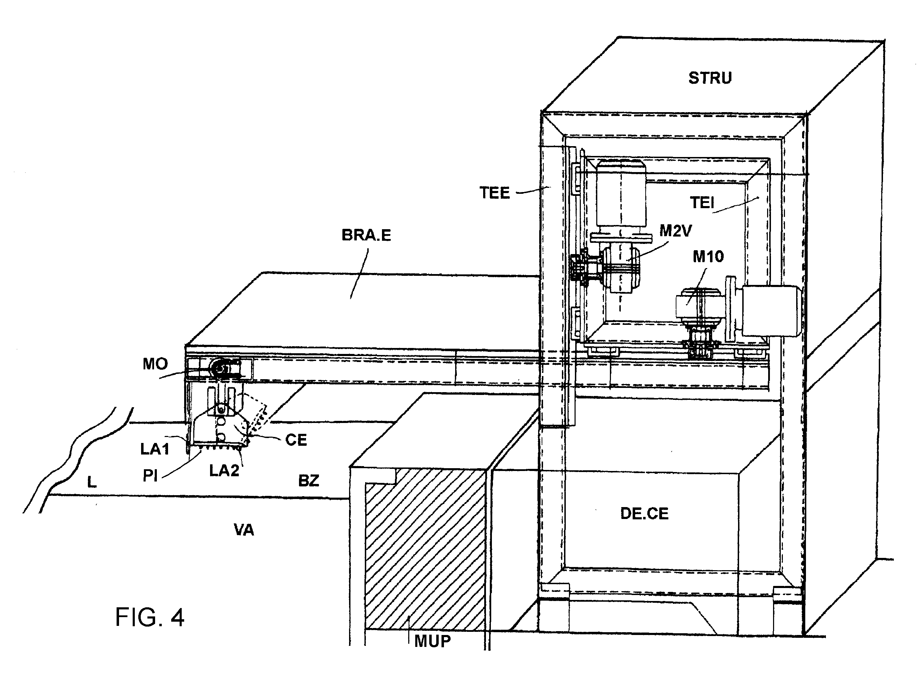

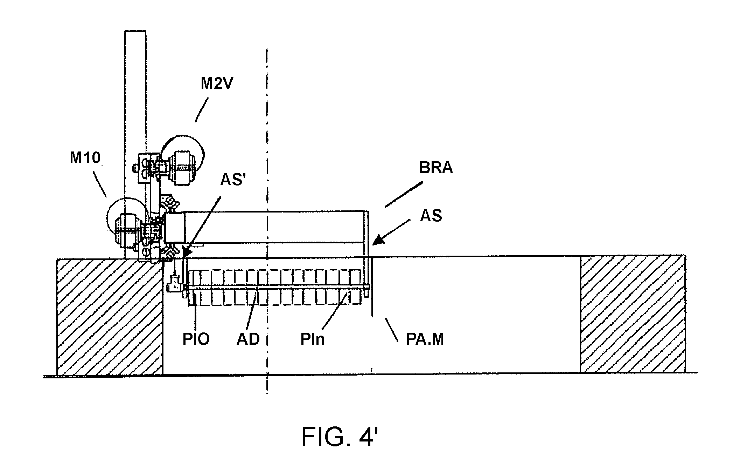

As anticipated the components represented in the perspective view of fig. 4 are coincident with those of fig. 3 and have some references of same fig. 3. Advantageously an helicoidal screw can be associated to each motor of linear bidirectional movement whereas an ad hoc motor can be utilized for the climb and descent movement of the second blade.

The final operation of the ash unloading by partial overturing of the basket is preferably carried out in correspondence of the impact on the above mentioned projecting nose NA by any stationary device associated to the basket in its return stroke; advantageously no further motors are requested therefore.

As the at least partially overturning of basket CE (and associated mechanisms) can be rather heavy and encumbering in some instances, it has been found convenient to associate the pegs, teeth and small blades PI (beforehand associated to the basket bottom), to a rotating rod AD as illustrated in the figures 2'- 2e', 3A' and 4', in which blade LA2 is now fixed to the bottom of first blade LA1 forming an angle higher than 90° over the plan of said LA1 (figures 2'- 2e'). Rod AD is fixed to arm BRA by means of two supports AS-AS' (fig. 4'), is provided with said pegs or teeth PI and is rotated (clockwise and counter-clockwise) by said not-visible motor M3. The higher (over 90°) inclination (figures 2'- 2e') of LA2 facilitates the direct unloading by pushing the ashes towards the vertical axis of below collector DE-CE in which ashes freely fall now when the arm BRA is minimally extended.

Similarly to fig. 2a, fig. 2a' shows arm BRA in its maximal extension over the bath BZ and the tub horizontal edge PBV. Fig. 2b' shows the vertically lowered (and horizontally extended) arm BRA till to bring the point Q of LA2 under the bath level L. Fig. 2c' shows the typical step in which the ash tamping takes place in the proximal zone ZP where has been brought by road AD that, because of the rotation force of motor M3, succeeds in strongly reducing the Zn-content of the ashes CE. Fig. 2d' shows the extraction first phase wherein blade LA2 is set in condition to scrape the superior portion PS of wall MUP. Fig. 2e' shows the point Q of LA2 which has been brought over said tub edge PBV because of a slight vertical rise SOLL of arm BRA (over the position of fig. 2d').

Characteristically because of a short backward movement ARR of BRA, blade point Q skims the plan of the tub edge PBV and pushes the ashes accumulated upon the surface of said PBV towards the below deposit DE-CE. In this position LA2 is moved horizontally to the right till to meet a stationary washer PU fixed to the structure STRU. Thanks to further movements controlled by microprocessor MC to BRA, also pegs, teeth small-blades PI and all the other tamping elements can be brought into contact with washer PU and be mechanically polished.

Fig. 3' is the front view of the lower portion of the structure of fig. 3 comprising (as above anticipated) said device consisting of the rod AD with relevant pegs and teeth PI rotated by the hidden motor M3. The references of the other components shown in this figure 3A' are the same of fig. 3A.

Fig. 4' shows the above mentioned arm BRA carrying and moving rod AD provided with a series of pegs Plo-Pln which, thanks to the rotation impressed to AD by motor M3 and, moreover, to the further follow-up movements of arm BRA, carry out the ash tamping phase BATT which allows the maximal recovery of the zinc trapped in the ashes CE and a strong reduction of the wastes: this is essential to practically reduce the environmental pollution as the zinc maximum recovery means at the same time a significant reduction of waste and therefore a strong reduction of local transportations to the recovery plants.

Said figure 4' shows also a movable bulkhead PMA which allows to define and vary the area and positioning of the proximal zone according to the capacity, design and dimensions of the different zinc plating plants on the market.

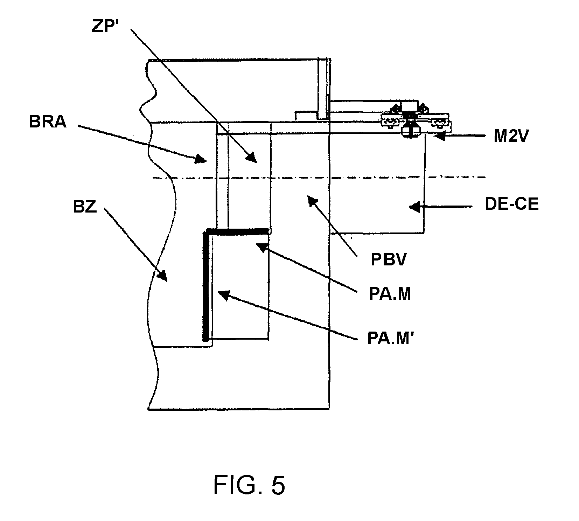

Fig. 5 (schematic and partial plan view of fig. 3') shows the collector DE-CE, the tub edge plane PBV, the arm BRA, the bath BZ, the additional mobile bulkhead PAM' to create a second pseudo-proximal zone ZP' mainly in the plants in which the skimming tub or basin does not have a so-called (per sb known) displacement cradle outside the working zone.

For illustrative clarity the invention has been described with reference to the (illustrative and not limitative) embodiments represented in the accompanying drawings, the invention is however susceptible of variants, changes, substitutions and the like which, if obvious to mean skilled persons, are to be considered comprised or falling within the scope of the invention.

## Claims

1. Method for the in-situ treatment of zinc bathes to collect ashes and recover metallic zinc trapped therein without environment pollution, lowering the waste quantities, and energy consumption, **characterized by** at least following steps of:
a) Surveying the zinc bath level (L);
b) Compacting the ashes by displacing and concentrating them in a proximal zone (ZP) at the bath internal edge;
c) Tamping of the so collected ashes in the proximal zone in order to reduce to minimum values the residual mass of zinc scums and consequently the quantity of fresh zinc to be integrated in the bath;
d) Pushing the so tamped ashes towards a collector and/or on at least one of the bath walls;
e) Extracting the so treated ashes by at least partially overturning said collector and/or by scraping said wall covered by ashes to be recovered.

2. Method according to claim 1, wherein the compacting step takes place by moving a blade which is extensible along its major axis orthogonal to the bath surface, between a minimum proximal value and a maximum distal value and, moreover, is vertically mobile from a starting zero level up to a series of levels of penetration into the bath that is per sè subjected to lowerings during the zinc plating phases.

3. Method according to claim 2, wherein said minimum proximal value is comprised between 10 and 80cm and said maximum distal value is comprised between 10 and 200cm, in respect to the starting position of the compacting blade.

4. Method according to claim 2, wherein the blade speed in the compacting phase is comprised between a lowest value of 0,5-1,5 preferably 1 meter each 30 second, and a highest value of 0,5-1,5 preferably 1 meter/second.

5. Method according to claim 1, wherein the ash tamping is carried out substantially in said proximal zone, under vertical, up-and-down movements between two extreme (minimum and maximum) levels of blades parallel to the zinc bath surface, without penetrating in the inferior layer of the bath essentially consisting of molten metallic zinc.

6. Method according to claim 5, wherein the tamping speed is comprised between a minimum value of 0,5-1,5 meter/second and a maximum value of 5-15 meters/second.

7. Method according to claim 1, wherein the tamped ashes are submitted to a strong rotational force and pushed on wall portions of the proximal zone, from which said so pushed ashes are recovered by scraping.

8. Apparatus to carry out the method according to the above claims 1-7, comprising: - a microprocessor; - a support basement (STU); - an arm (BRA) movable in respect to the bath, horizontally (forward and backward) and vertically (up and down); - a first blade associated to the arm free end; and a second blade associated to said first blade; - means for the horizontal movement of said arm between two limits, the first limit being a not-extended position substantially corresponding to a compacted configuration, and the second limit being an extended position substantially corresponding to the whole length of said arm; - means for the arm vertical movement between at least three levels starting from the initial rest level of the mechanism, namely the bath entry position; - and tamping means associated to a carrier selected between an ash collector and a turning rod.

9. Apparatus according to claim 8, comprising a first vertical blade (LA1) associated to said horizontal arm (BRA), and an at least partially overturning basket (CE) having its top oscillatingly associated to said arm and its bottom associated to a second blade (LA2) and to pegs and teeth (Pl).

10. Apparatus according to claim 8, comprising a first vertical blade (LA1) rigidly associated to said horizontal arm (BRA), a second blade (LA2) associated under a angle over 90° to the distal end of said first blade, a vertical rotary rod (AD) carrying said pegs and teeth (PI), and a cleaning device to clean pegs and other components.

11. Apparatus according to at least one of the claims 8-10, comprising a rigid structure (STRU) carrying said horizontally and vertically moving arm (BRA), vertically displacable blades (LA1 and LA2) a series of pegs (nPI) associated to a basket and/or to a rotary rod (AD), a microprocessor and a robotized motorization realizing a kinematic on three axes with four freedom degrees.
